# EUROPEAN PATENT APPLICATION

(11) **EP 4 730 111 A1**
(43) Date of publication of application: **22.04.2026**
(21) Application number: 25770218.3
(22) Date of filing: 01.07.2025
(51) Int. Cl.: G06F 8/65

(54) **SOFTWARE UPDATING METHOD AND DEVICE FOR VEHICLE CONTROLLER, DIGITAL SIGNATURE SYSTEM, AND COMPUTER PROGRAM PRODUCT**

(30) Priority: 04.07.2024 CN 202410893881
(71) Applicant: Chery Automobile Co., Ltd., Wuhu, Anhui 241006 (CN)
(72) Inventor: XIANG, Hui, Wuhu, Anhui 241006 (CN); MA, Wei, Wuhu, Anhui 241006 (CN); LIU, Xue, Wuhu, Anhui 241006 (CN); LIU, Kongxiang, Wuhu, Anhui 241006 (CN)
(74) Representative: Yang, Shu
(86) International application number: PCT/CN2025/106408
(87) International publication number: WO 2026/007945

(57) **Abstract**

The present disclosure discloses a method and apparatus for updating software of a vehicle controller, a digital signing system, and a computer program product, which belong to the field of vehicle technologies. The method includes: acquiring an identifier of a target controller, an identifier of a target digital signature algorithm and a digest of a software update package for a target software; retrieving a private key in a first key pair from a first database based on the identifier of the target controller and the identifier of the target digital signature algorithm, wherein the first database is configured to store private keys in key pairs applied for different controllers and different digital signature algorithms; and generating a first signature file based on the digest of the software update package for the target software and the private key in the first key pair. This application enables unified online management of key pairs, allowing for online retrieval of private keys in the key pairs during signature file generation. Compared to offline management and private key retrieval, this application enhances the efficiency of retrieving key pairs, thereby improving the efficiency of generating signature files.

## Description

This application claims priority to Chinese Patent Application No. 202410893881.8, entitled "METHOD AND APPARATUS FOR UPDATING SOFTWARE OF VEHICLE CONTROLLER, DIGITAL SIGNING SYSTEM AND COMPUTER PROGRAM PRODUCT" and filed on July 4, 2024, the disclosure of which is herein incorporated by reference in its entirety.

### TECHNICAL FIELD

The present disclosure relates to the field of vehicle technologies, and in particular, relates to a method and apparatus for updating software of a vehicle controller, a digital signing system and a computer program product.

### BACKGROUND

As demands for vehicles' power performance, efficiency, and comfort continue to rise, electronic and electrical systems integrated within vehicles become increasingly complex, such as engine systems, power distribution systems, and instrument systems. Each of these electronic and electrical systems includes a controller equipped with installed software. Under certain circumstances, the software may be subject to unauthorized tampering or malicious attacks during updates. Consequently, it is essential to employ appropriate methods for software updates to ensure their security.

In related technologies, digital signatures are employed to verify the authenticity and integrity of software packages. However, since the key pairs used for digital signatures are generated and managed offline, frequent software upgrades during vehicle development can lead to inefficient digital signature processes when the key pairs are managed offline, resulting in negative impacts on vehicle development schedules.

### SUMMARY

The present disclosure provides a method and apparatus for updating software of a vehicle controller, a digital signing system, and a computer program product, which improves the efficiency of generating signature files. Even if software is updated frequently, the present disclosure still improve the efficiency of digital signatures and does produce negative impacts on vehicle development schedules. The technical solutions are as follows.

In one aspect, a method for updating software of a vehicle controller is provided. The method includes:
acquiring an identifier of a target controller, an identifier of a target digital signature algorithm, and a digest of a software update package for a target software, wherein the target controller is used for installing the target software;
retrieving a private key in a first key pair from a first database based on the identifier of the target controller and the identifier of the target digital signature algorithm, wherein the first database is configured to store private keys in key pairs applied for different controllers and different digital signature algorithms, and the first key pair is applied for the target controller and the target digital signature algorithm; and
generating a first signature file based on the digest of the software update package for the target software and the private key in the first key pair, wherein the first signature file is used to verify the authenticity and integrity of the software update package before the target controller updates the target software.

Optionally, the acquiring the identifier of the target controller, the identifier of the target digital signature algorithm, and the digest of the software update package for the target software includes:
displaying a digital signature interface, wherein the digital signature interface is configured to acquire a digest of an update package of a currently to-be-signed software, an identifier of a controller for installing the currently to-be-signed software, and an identifier of a digital signature algorithm to be adopted; and
acquiring the identifier of the target controller, the identifier of the target digital signature algorithm, and the digest of the software update package for the target software from the digital signature interface.

Optionally, before acquiring the identifier of the target controller, the identifier of the target digital signature algorithm, and the digest of the software update package for the target software, the method further includes:
acquiring a key application request, wherein the key application request contains the identifier of the target controller and the identifier of the target digital signature algorithm;
retrieving the first database for the private key in the first key pair based on the identifier of the target controller and the identifier of the target digital signature algorithm; and
in response to the private key in the first key pair not being stored in the first database, generating the first key pair by invoking a hardware encryptor, and storing the private key in the first key pair in the first database based on the identifier of the target controller and the identifier of the target digital signature algorithm.

Optionally, after generating the first key pair by invoking the hardware encryptor, the method further includes: encrypting the private key in the first key pair by invoking the hardware encryptor and acquiring an encryption algorithm for the private key in the first key pair;
storing the private key in the first key pair in the first database based on the identifier of the target controller and the identifier of the target digital signature algorithm includes: storing the encrypted private key in the first key pair in the first database based on the identifier of the target controller and the identifier of the target digital signature algorithm; and
generating the first signature file based on the digest of the software update package for the target software and the private key in the first key pair includes: decrypting the encrypted private key based on the encryption algorithm for the private key in the first key pair; and generating the first signature file based on the digest of the software update package for the target software and the decrypted private key.

Optionally, the method further includes:
receiving a compressed data package sent by an after-sales upgrade system, wherein the compressed data package contains the software update package for the target software and the first signature file;
generating a second key pair corresponding to the compressed data package, and generating a second signature file based on the compressed data package and a private key in the second key pair, wherein the second signature file is configured to verify authenticity and integrity of the compressed data package; and
sending the second signature file and a public key in the second key pair to the after-sales upgrade system, such that the after-sales upgrade system sends the public key in the second key pair, the second signature file, and the compressed data package to a diagnostic device, thereby instructing the target controller to update the target software upon success of verification of the compressed data package by the diagnostic device.

In another aspect, a method for updating software for a vehicle controller is provided. The method includes:
acquiring a software update task, wherein the software update task carries an identifier of a target controller and an updated version of a target software, and the target controller is used for installing the target software;
acquiring a software update package for the target software and a first signature file based on the identifier of the target controller and the updated version of the target software, wherein the first signature file is used to verify authenticity and integrity of the software update package for the target software before the target controller updates the target software; and
sending the software update package for the target software and the first signature file to the target controller by a diagnostic device, such that the target controller updates the target software based on the software update package in response to the success of verification of the software update package based on the first signature file.

Optionally, before sending the software update package for the target software and the first signature file to the target controller by the diagnostic device, the method further includes:
compressing the software update package and the first signature file to obtain a compressed data package;
sending the compressed data package to a digital signature system such that the digital signature system generates a second key pair corresponding to the compressed data package and generates a second signature file based on the compressed data package and a private key in the second key pair, wherein the second signature file is used to verify authenticity and integrity of the compressed data package; and
receiving the second signature file and a public key in the second key pair sent by the digital signature system;
sending the software update package for the target software and the first signature file to the target controller by the diagnostic device includes:
   sending the compressed data package, the second signature file, and the public key in the second key pair to the diagnostic device such that the diagnostic device sends the software update package for the target software and the first signature file to the target controller in response to success of verification of the compressed data package using the public key in the second key pair and the second signature file.

In yet another aspect, an apparatus for updating software of a vehicle controller is provided. The apparatus includes:
a first acquiring module configured to acquire an identifier of a target controller, an identifier of a target digital signature algorithm, and a digest of a software update package for a target software, wherein the target controller is used for installing the target software;
a first retrieving module configured to retrieve a private key in a first key pair from a first database based on the identifier of the target controller and the identifier of the target digital signature algorithm, wherein the first database is configured to store private keys in key pairs applied for different controllers and different digital signature algorithms, and the first key pair is applied for the target controller and the target digital signature algorithm; and
a first generating module configured to generate a first signature file based on the digest of the software update package for the target software and the private key in the first key pair, wherein the first signature file is used to verify the authenticity and integrity of the software update package before the target controller updates the target software.

Optionally, the first acquiring module includes:
a displaying submodule configured to display a digital signature interface, wherein the digital signature interface is used to acquire a digest of an update package of a currently to-be-signed software, an identifier of a controller for installing the currently to-be-signed software, and an identifier of a digital signature algorithm to be adopted; and
an acquiring submodule configured to acquire the identifier of the target controller, the identifier of the target digital signature algorithm, and the digest of the software update package for the target software from the digital signature interface.

Optionally, the apparatus further includes:
a second acquiring module configured to acquire a key application request, wherein the key application request contains the identifier of the target controller and the identifier of the target digital signature algorithm;
a second retrieving module configured to retrieve the first database for the private key in the first key pair based on the identifier of the target controller and the identifier of the target digital signature algorithm; and
a second generating module configured to, in response to the private key in the first key pair not being stored in the first database, generate the first key pair by invoking a hardware encryptor, and store the private key in the first key pair in the first database based on the identifier of the target controller and the identifier of the target digital signature algorithm.

Optionally, the apparatus further includes:
an encrypting module configured to encrypt the private key in the first key pair by invoking the hardware encryptor and acquiring an encryption algorithm for the private key in the first key pair;
the second generating module includes:
   a storing submodule configured to store the encrypted private key in the first key pair in the first database based on the identifier of the target controller and the identifier of the target digital signature algorithm; and
the first generating module includes:
   a decrypting submodule configured to decrypt the encrypted private key based on the encryption algorithm for the private key in the first key pair; and to generate the first signature file based on the digest of the software update package for the target software and the decrypted private key.

Optionally, the apparatus further includes:
a receiving module configured to receive a compressed data package sent by an after-sales upgrade system, wherein the compressed data package contains the software update package for the target software and the first signature file;
a third generating module configured to generate a second key pair corresponding to the compressed data package, and generate a second signature file based on the compressed data package and a private key in the second key pair, wherein the second signature file is configured to verify authenticity and integrity of the compressed data package; and
a sending module configured to send the second signature file and a public key in the second key pair to the after-sales upgrade system, such that the after-sales upgrade system sends the public key in the second key pair, the second signature file, and the compressed data package to a diagnostic device, thereby instructing the target controller to update the target software upon success of verification of the compressed data package by the diagnostic device.

In another aspect, an apparatus for updating software of a vehicle controller is provided. The apparatus includes:
a first acquiring module configured to acquire a software update task, wherein the software update task carries an identifier of a target controller and an updated version of a target software, and the target controller is used for installing the target software;
a second acquiring module configured to acquire a software update package for the target software and a first signature file based on the identifier of the target controller and the updated version of the target software, wherein the first signature file is used to verify authenticity and integrity of the software update package for the target software before the target controller updates the target software; and
a first sending module configured to send the software update package for the target software and the first signature file to the target controller by a diagnostic device, such that the target controller updates the target software based on the software update package in response to the success of verification of the software update package based on the first signature file.

Optionally, the apparatus further includes:
a compressing module configured to compress the software update package and the first signature file to obtain a compressed data package;
a second sending module configured to send the compressed data package to a digital signature system such that the digital signature system generates a second key pair corresponding to the compressed data package and generates a second signature file based on the compressed data package and a private key in the second key pair, wherein the second signature file is used to verify authenticity and integrity of the compressed data package; and
a receiving module configured to receive the second signature file and a public key in the second key pair sent by the digital signature system; and
the first sending module includes:
   a sending submodule configured to send the compressed data package, the second signature file, and the public key in the second key pair to the diagnostic device such that the diagnostic device sends the software update package for the target software and the first signature file to the target controller in response to success of verification of the compressed data package using the public key in the second key pair and the second signature file.

In another aspect, a digital signature system is provided. The digital signature system includes a memory and a processor. The memory is configured to store a computer program, and the processor, when executing the computer program stored in the memory, is caused to perform the method for updating software of the vehicle controller as described above.

In another aspect, an after-sales upgrade system is provided. The after-sales upgrade system includes a memory and a processor. The memory is configured to store a computer program, and the processor, when executing the computer program stored in the memory, is caused to perform the method for updating software of the vehicle controller as described above.

In another aspect, a computer-readable storage medium is provided. The storage medium stores the computer program. The computer program, when executed by a processor, implements the method for updating software of the vehicle controller as described above.

In another aspect, a computer program product including instructions is provided. The instructions, when executed on a computer, cause the computer to perform the method for updating software of the vehicle controller as described above.

The technical solutions according to the present disclosure provide at least the following advantageous effects.

The first database stores private keys in the key pairs applied for different controllers and different digital signature algorithms. In this way, when there is a need to generate a signature file for the software update package for the target software, the digital signature system can retrieve the private key in the first key pair from the first database based on the identifier of the target controller and the identifier of the target digital signature algorithm, and then generate the first signature file using the digest of the software update package for the target software and the private key in the first key pair. In other words, by centrally managing key pairs online, the private key in the key pair can be queried online when generating signature files, which improves the efficiency of key pair retrieval, and thus the efficiency of signature file generation, compared to offline management and querying of private keys. The efficiency of the digital signature process is improved even with frequent software upgrades, without impacting vehicle development schedules.

### BRIEF DESCRIPTION OF DRAWINGS

To describe the technical solutions in the embodiments of the present disclosure more clearly, the following briefly introduces the accompanying drawings to be used in the description of the embodiments. Obviously, the accompanying drawings in the following description show merely some embodiments of the present disclosure, and a person of ordinary skills in the art may still derive other drawings from these accompanying drawings without creative efforts.
FIG. 1 is a schematic structural diagram of an implementation environment according to some embodiments of the present disclosure;
FIG. 2 is a schematic structural diagram of another implementation environment according to some embodiments of the present disclosure;
FIG. 3 is a flowchart of a method for updating software of a vehicle controller according to some embodiments of the present disclosure;
FIG. 4 is a flowchart of a method for updating software of a vehicle controller according to some embodiments of the present disclosure;
FIG. 5 is a flowchart of a method for updating software of a vehicle controller according to some embodiments of the present disclosure;
FIG. 6 is a flowchart of a method for updating software of a vehicle controller according to some embodiments of the present disclosure;
FIG. 7 is a schematic structural diagram of an apparatus for updating software of a vehicle controller according to some embodiments of the present disclosure;
FIG. 8 is a schematic structural diagram of an apparatus for updating software of a vehicle controller according to some embodiments of the present disclosure; and
FIG. 9 is a schematic structural diagram of a server according to some embodiments of the present disclosure.

### DETAILED DESCRIPTION

To further clarify the objectives, technical solutions, and advantages of the embodiments of the present disclosure, the following detailed description of the embodiments of the present disclosure is provided with reference to the accompanying drawings.

Before providing a detailed explanation of the method for updating software of the vehicle controller according to the embodiments of the present disclosure, the application scenarios and implementation environment of the embodiments of the present disclosure will be described.

As demands for vehicles' power performance, efficiency, and comfort continue to rise, electronic and electrical systems integrated within vehicles become increasingly complex, such as engine systems, power distribution systems, and instrument systems. Each of these electronic and electrical systems includes a controller equipped with installed software. Furthermore, a variety of third-party devices are available, including third-party on-board devices or third-party devices in vehicle repair shops that can access important information on the vehicle. These third-party devices may illegally tamper with or maliciously attack the software during the software upgrades. Therefore, to prevent security risks posed by third-party devices during software upgrades, it is necessary to adopt a reasonable method for software updates to ensure the security of software upgrades.

In related technologies, digital signatures are employed to verify the authenticity and integrity of software packages. However, since the key pairs used for digital signatures are generated and managed offline, there is a risk of key pair leakage. Furthermore, software may be frequently upgraded during vehicle development. Offline key management often results in an inefficient digital signature process, impacting vehicle development schedules.

In view of above, a method for updating software of a vehicle controller is provided according to embodiments of the present disclosure. A digital signature system is capable of generating and managing key pairs online, improving the efficiency of the digital signature process.

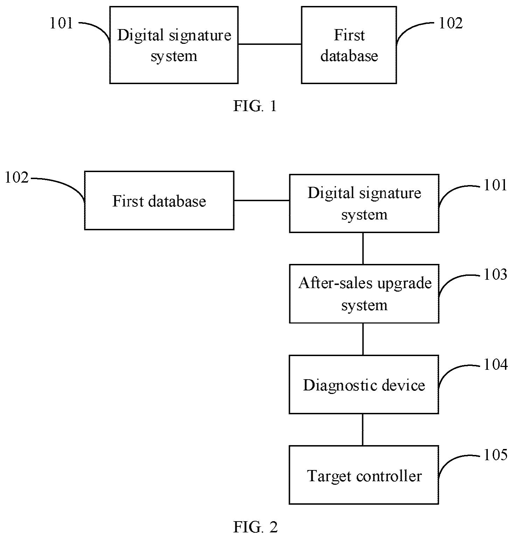

Reference is made to FIG. 1, which is a schematic diagram of an implementation environment according to some embodiments. The implementation environment includes a digital signature system 101 and a first database 102. The digital signature system 101 communicates with the first database 102 via a wired or wireless connection. Alternatively, the digital signature system 101 includes the first database 102. The embodiments of the present disclosure are not limited thereto.

The digital signature system 101 is configured to acquire an identifier of a target controller, an identifier of a target digital signature algorithm, and a digest of a software update package for the target software, and retrieve a private key in a first key pair from private keys in key pairs applied for by different controllers and different digital signature algorithms stored in the first database 102, based on the identifier of the target controller and the identifier of the target digital signature algorithm. The digital signature system 101 then generates a first signature file based on the digest of the software update package for the target software and the private key in the first key pair.

In some embodiments, referring to FIG. 2, the implementation environment further includes an after-sales upgrade system 103, a diagnostic device 104, and a target controller 105. The after-sales upgrade system 103 respectively communicates with the digital signature system 101 and the diagnostic device 104 via a wired or wireless connection. The diagnostic device 104 communicates with the target controller 105 via a wired or wireless connection. The embodiments of the present disclosure are not limited thereto.

The after-sales upgrade system 103 is configured to acquire software update tasks, acquire the software update package for the target software and first signature file based on the identifier of the target controller 105 and the updated version of the target software, and send the software update package for the target software and first signature file to the diagnostic device 104. The diagnostic device 104 is configured to send the software update package for the target software and the first signature file to the target controller 105. The target controller 105 is configured to verify the software update package based on the first signature file and, in response to the success of the verification, update the target software according to the software update package.

The digital signature system 101 and the after-sales upgrade system 103 are a standalone server, a server cluster or distributed system constituted by multiple physical servers, a cloud server that provides basic cloud computing services such as cloud services, cloud databases, cloud computing, cloud functions, cloud storage, network services, cloud communications, middleware services, domain name services, security services, CDN (Content Delivery Network), and big data and artificial intelligence platforms, or a cloud computing service center.

The diagnostic device 104 is a vehicle diagnostic instrument, a host computer, or any external device capable of instructing a controller to perform a software update.

The target controller 105 is any controller with software installed, such as an engine controller, a body controller, and a chassis controller of a vehicle, and so on.

Those skilled in the art will appreciate that the aforementioned digital signature system 101, after-sales upgrade system 103, diagnostic device 104, and target controller 105 are merely examples. Other existing or future potential digital signature systems, after-sales upgrade systems, diagnostic devices, and target controllers that are applicable to the embodiments of the disclosure should also be encompassed within the scope of protection of the embodiments of the disclosure and are incorporated herein by reference.

It should be noted that the application scenarios and implementation environments described in the embodiments of the disclosure are intended to more clearly illustrate the technical solutions of the embodiments of the disclosure and do not impose limitations on the technical solutions according to the embodiments of the disclosure. Those skilled in the art will appreciate that as new application scenarios emerge and implementation environments evolve, the technical solutions according to the embodiments of the disclosure will continue to be applicable with respect to similar technical problems.

Next, a method for updating software of a vehicle controller according to some embodiments of the present disclosure is explained in detail.

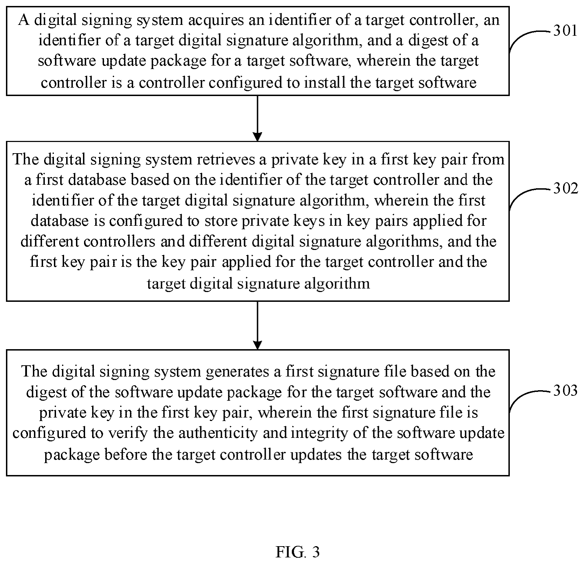

FIG. 3 is a flowchart of a method for updating software of a vehicle controller according to some embodiments of the present disclosure, which is applied to a digital signature system. Referring to FIG. 3, the method includes the following steps.

In step 301, the digital signature system acquires the identifier of the target controller, the identifier of the target digital signature algorithm, and the digest of the software update package for the target software. The target controller is the controller configured to install the target software.

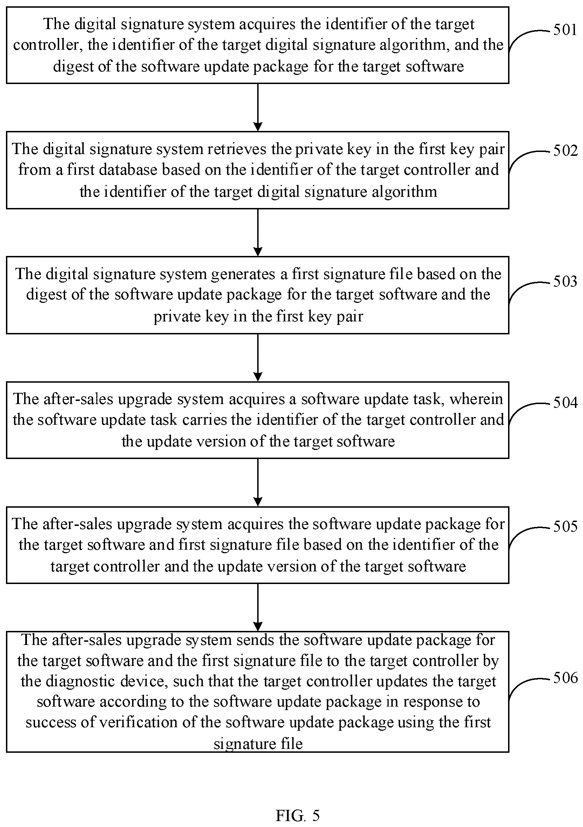

The implementation of step 301 may be found in step 501 in the embodiment of FIG. 5 and will not be further described here.

In step 302, the digital signature system retrieves the private key in the first key pair from a first database based on the identifier of the target controller and the identifier of the target digital signature algorithm. The first database is configured to store private keys in key pairs applied for different controllers and different digital signature algorithms. The first key pair is the key pair applied for the target controller and the target digital signature algorithm.

The implementation of step 302 may be found in step 502 in the embodiment of FIG. 5 and will not be further described here.

In step 303, the digital signature system generates a first signature file based on the digest of the software update package for the target software and the private key in the first key pair. The first signature file is configured to verify the authenticity and integrity of the software update package before the target controller updates the target software.

The implementation of step 303 may be found in step 503 of the embodiment in FIG. 5 and will not be further described here.

In some embodiments of the present disclosure, the first database stores private keys in the key pairs applied for different controllers and different digital signature algorithms. In this way, when there is a need to generate a signature file for the software update package for the target software, the digital signature system can retrieve the private key in the first key pair from the first database based on the identifier of the target controller and the identifier of the target digital signature algorithm, and then generate the first signature file using the digest of the software update package for the target software and the private key in the first key pair. In other words, by centrally managing key pairs online, the private key in the key pair can be queried online when generating signature files, which improves the efficiency of key pair retrieval, and thus the efficiency of signature file generation, compared to offline management and querying of private keys. The efficiency of the digital signature process is improved even with frequent software upgrades, without impacting vehicle development schedules.

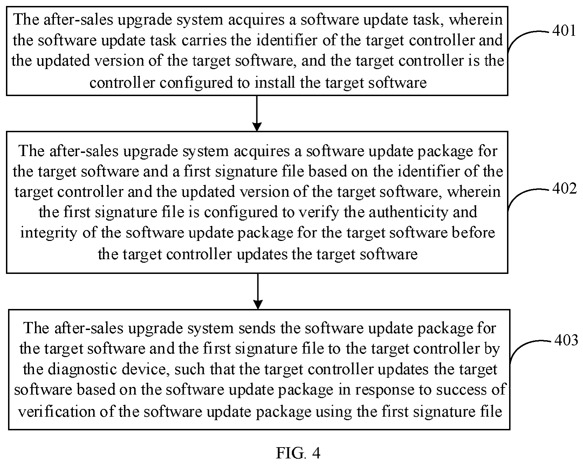

FIG. 4 is a flowchart of a method for updating software of a vehicle controller according to some embodiments of the present disclosure, which is applied to an after-sales upgrade system. Referring to FIG. 4, the method includes the following steps.

In step 401, the after-sales upgrade system acquires a software update task. The software update task carries the identifier of the target controller and the updated version of the target software. The target controller is the controller configured to install the target software.

The implementation of step 401 may be found in step 504 in the embodiment of FIG. 5 and will not be further described here.

In step 402, the after-sales upgrade system acquires a software update package for the target software and a first signature file based on the identifier of the target controller and the updated version of the target software. The first signature file is configured to verify the authenticity and integrity of the software update package for the target software before the target controller updates the target software.

The implementation of step 402 may be found in step 505 in the embodiment of FIG. 5 and will not be further described here.

In step 403, the after-sales upgrade system sends the software update package for the target software and the first signature file to the target controller by the diagnostic device, such that the target controller updates the target software based on the software update package in response to success of verification of the software update package using the first signature file.

The implementation of step 403 may be found in step 506 in the embodiment of FIG. 5 and will not be further described here.

In some embodiments of the present disclosure, the after-sales upgrade system sends the software update package for the target software and the first signature file to the target controller by the diagnostic device. Further, the target controller updates the software according to the software update package in response to the success of verification of the software update package based on the first signature file. Because the first signature file is generated by online querying the private key in the key pair, the efficiency of key pair retrieval and thus the efficiency of signature file generation are improved compared to offline private key management and querying. The efficiency of the digital signature process is improved even with frequent software updates, without impacting vehicle development schedules. Furthermore, verifying the software update package using the first signature file can prevent security risks during software upgrades caused by illegal tampering with the software update package.

FIG. 5 is a flowchart of a method for updating software of a vehicle controller according to some embodiments of the present disclosure. Referring to FIG. 5, the method includes the following steps.

In step 501, the digital signature system acquires the identifier of the target controller, the identifier of the target digital signature algorithm, and the digest of the software update package for the target software. The target controller is the controller configured to install the target software.

In some embodiments, when a new version of software is available in a controller, the digital signature system may first digitally sign the software update package for the software to prevent unauthorized tampering with the software update package for the software. Because the digital signature system needs to identify the controller to which the new version of the software belongs, it can acquire the identifier of the target controller. Furthermore, the digital signature system also needs to identify the algorithm used for the digital signature and, therefore, acquires the identifier of the target digital signature algorithm. In addition, the digital signature system also needs to acquire the digest of the software update package for the target software.

The identifier of the target controller uniquely identifies the target controller and may be its name or number, among other options, such as the engine controller, body controller, or chassis controller, etc. The identifier of the target digital signature algorithm is used to uniquely identify the target digital signature algorithm and may be its name, such as RSA (Rivest-Shamir-Adleman, named after its inventors: Ron Rivest, Adi Shamir, and Leonard Adleman) 256, RSA512, or RSA1024. The number in the RSA algorithm is used to represent the key length. A longer key length indicates greater security. The digest of the software update package for the target software is used to indicate the main information in the software update package.

The target controller is the controller that is configured to install the target software. In other words, the target controller is the controller that requires a software update. As an example, supposing a vehicle has an engine controller, a body controller, and a chassis controller, the software of the engine controller needs to be currently updated, whereas the software of the body controller and chassis controller does not. In this case, the target controller is the engine controller.

In some embodiments, the digital signature system acquires the identifier of the target controller, the identifier of the target digital signature algorithm, and the software update package for the target software digest by: displaying a digital signature interface configured to acquire a digest of an update package of a currently to-be-signed software, an identifier of the controller used to install the currently to-be-signed software, and an identifier of a digital signature algorithm to be adopted; and acquiring the identifier of the target controller, the identifier of the target digital signature algorithm, and the digest of the software update package for the target software from the digital signature interface.

As an example, the digital signature interface includes an input box for the digest of the software update package, an input box for the identifier of the controller, an input box for the identifier of the digital signature algorithm, and an "OK" option. The input box for the digest of the software update package is used to acquire the digest of the software update package for the currently to-be-signed software. That is, the user can enter or upload the summary of the software update package for the currently to-be-signed software in the input box for the digest of the software update package. The input box for the identifier of the controller is used to acquire the identifier of the controller used to install the currently to-be-signed software. That is, the user can enter the identifier of the controller used to install the software to be signed in the input box for the identifier of the controller. The input box for the identifier of the digital signature algorithm is used to acquire the identifier of the adopted digital signature algorithm. That is, the user can enter the identifier of the adopted digital signature algorithm in the input box for the identifier of the digital signature algorithm. Therefore, after the user enters the digest of the software update package for the currently to-be-signed software, the identifier of the controller of the currently to-be-signed software, and the identifier of the adopted digital signature algorithm into the corresponding input boxes and clicks the "OK" option, the digital signature system can acquire the identifier of the target controller, the identifier of the target digital signature algorithm, and the digest of the software update package for the target software from the digital signature interface. Of course, the digital signature interface does not have to include an "OK" option. In this case, as X seconds elapse since the user enters the digest of the software update package for the currently to-be-signed software, the identifier of the controller of the currently to-be-signed software, and the identifier of the adopted digital signature algorithm into the corresponding input boxes in the digital signature interface, the digital signature system may automatically acquire the identifier of the target controller, the identifier of the target digital signature algorithm, and the digest of the software update package for the target software from the digital signature interface.

As an example, in some embodiments, if the size of the software update package for the currently to-be-signed software does not exceed a threshold, indicating that the size of the software update package for the currently to-be-signed software does not exceed the upper limit requirement of the digital signature system, the digital signature system can directly acquire the digest of the software update package based on the software update package for the currently to-be-signed software. This eliminates the need for users to acquire the digest of the software update package for the currently to-be-signed software in advance. Instead, users can simply package the software update package for the currently to-be-signed software, the identifier of the controller of the currently to-be-signed software, and the identifier of the employed digital signature algorithm into a data analysis package and upload the data analysis package to the digital signature interface, thereby saving user time. Furthermore, the header of the data analysis package contains the identifier of the controller of the currently to-be-signed software and the identifier of the digital signature algorithm to be adopted. This enables the digital signature system to acquire the identifier of the target controller, the identifier of the target digital signature algorithm, and the software update package for the target software based on the data analysis package. Subsequently, the digest of the software update package for the target software can be acquired based on the software update package for the target software.

As an example, the digital signature system can acquire a digest of the software update package for the target software by using a hash algorithm based on the software update package for the currently to-be-signed software. Specifically, the digest of the software update package is acquired by performing a hash operation on the software update package. Because hash functions are collision-resistant, the digest of the software update package acquired using the hash algorithm may be used to detect whether the software update package has been tampered with. Of course, in actual applications, other approaches can be employed to acquire the digest of the software update package for the target software, and the embodiments of the present disclosure are not limited thereto.

In some embodiments, if the size of the software update package for the currently to-be-signed software exceeds a threshold, directly uploading the data analysis package to the digital signature system may cause the digital signature interface or the digital signature system to malfunction due to the size of the software update package exceeding the upper limit requirements of the digital signature system. Therefore, if the size of the software update package for the currently to-be-signed software exceeds the threshold, the digest of the software update package for the target software can be directly entered into the digital signature interface. In some embodiments, if the size of the update package for the currently to-be-signed software exceeds the threshold, the digest of the software update package for the target software may also be directly entered into the digital signature interface.

It should be noted that the above description is provided in a way that a user enters the digest of the update package for the currently to-be-signed software, the identifier of the controller used to install the currently to-be-signed software, and the identifier of the digital signature algorithm to be adopted in the digital signature interface to thereby enable the digital signature system to acquire the identifier of the target controller, the identifier of the target digital signature algorithm, and the digest of the software update package for the target software. In other words, the digital signature system provides a webpage interface to acquire the identifier of the target controller, the identifier of the target digital signature algorithm, and the digest of the software update package for the target software. In some embodiments, the digital signature system acquires the identifier of the target controller, the identifier of the target digital signature algorithm, and the digest of the software update package for the target software through other methods. For example, if the vehicle also includes a business system, the business system may directly send the identifier of the target controller, the identifier of the target digital signature algorithm, and the digest of the software update package for the target software to the digital signature system. The embodiments of the present disclosure is not limited thereto.

In step 502, the digital signature system retrieves the private key in the first key pair from a first database based on the identifier of the target controller and the identifier of the target digital signature algorithm. The first database is used to store private keys in the key pairs applied for different controllers and different digital signature algorithms. The first key pair is a key pair applied for the target controller and the target digital signature algorithm.

Because the first database stores the private keys in the key pairs applied for different controllers and different digital signature algorithms, the private key in the first key pair is retrieved from the first database based on the acquired identifier of the target controller and the identifier of the target digital signature algorithm.

In some embodiments, before acquiring the identifier of the target controller, the identifier of the target digital signature algorithm, and the digest of the software update package for the target software, the digital signature system may also acquire a key application request, the key application request containing the identifier of the target controller and the identifier of the target digital signature algorithm; retrieve the first database for the private key in the first key pair based on the identifier of the target controller and the identifier of the target digital signature algorithm; and in response to the private key in the first key pair being not stored in the first database, generate the first key pair by invoking a hardware encryptor, and store the private key in the first key pair in the first database based on the identifier of the target controller and the identifier of the target digital signature algorithm.

Because the key application request contains the identifier of the target controller and the identifier of the target digital signature algorithm, and the first database stores private keys in the key pairs applied for different controllers and different digital signature algorithms, the digital signature system may retrieve the first database for the private key corresponding to the identifier of the target controller and the identifier of the target digital signature algorithm contained in the key application request, after acquiring the key application request.

If the corresponding private key is already stored in the first database based on the identifier of the target controller and identifier of the target digital signature algorithm carried in the key application request, it indicates that a key pair corresponding to the target controller and target digital signature algorithm has already been applied, no further request is required. Therefore, as long as the controller and digital signature algorithm are the same, the same key pair will be employed to digitally sign the digests of software update packages for different controller software in subsequent processes.

If the corresponding private key is not stored in the first database based on the identifier of the target controller and the identifier of the target digital signature algorithm carried in the key application request, it indicates that a key pair corresponding to the target controller and target digital signature algorithm has not yet been applied. In this case, the digital signature system can invoke the hardware encryptor to generate a first key pair corresponding to the target controller and target digital signature algorithm, and store the private key in the first key pair inthe first database based on the identifier of the target controller and the identifier of the target digital signature algorithm. In this way, the private key in the first key pair can be found from the first database in subsequent processes based on the identifier of the target controller and the identifier of the target digital signature algorithm.

In some embodiments, the first database may also store the public key in the first key pair. Any person or device can directly retrieve the public key in the first key pair from the first database based on the identifier of the target controller and the identifier of the target signature algorithm. In other words, the public key in the first key pair is publicly available.

In addition, in some embodiments, because the hardware encryptor implements the encryption algorithm in hardware, and the hardware-level algorithm is not susceptible to software attacks, generating key pairs using the hardware encryptor can generate high-quality random key pairs in a secure environment, thereby ensuring the intensity of the key pairs.

In some embodiments, after generating the first key pair by invoking the hardware encryptor, the digital signature system may also invoke the hardware encryptor to encrypt the private key in the first key pair and acquire the encryption algorithm for the private key in the first key pair. The encrypted private key in the first key pair is then stored in the first database based on the identifier of the target controller and the identifier of the target digital signature algorithm.

That is, to improve the security of the stored private key, the digital signature system may also invoke the hardware encryptor again to encrypt the private key in the first key pair after invoking the hardware encryptor to generate the first key pair, and store the encrypted private key in the first database based on the identifier of the target controller and the identifier of the target digital signature algorithm.

Furthermore, to enable the digital signature system to decrypt the encrypted private key in the first key pair after acquiring it from the first database based on the identifier of the target controller and the identifier of the target digital signature algorithm during subsequent process, the hardware encryptor may also send the encryption algorithm for the private key to the digital signature system after encrypting the private key in the first key pair, such that the digital signature system can obtain the encryption algorithm.

It should be noted that the algorithm used by the hardware encryptor to encrypt the private key in the first key pair may be the Data Encryption Standard (DES) algorithm, the Message-Digest Algorithm 5 (MD5), or other encryption algorithms, and the embodiments of the present disclosure is not limited thereto.

The above description is provided by taking the digital signature system invoking a hardware encryptor to generate a key pair and encrypt the private key in the key pair as an example. In actual applications, the digital signature system may also generate a key pair or encrypt the private key in the key pair by using other methods, and the embodiments of the present disclosure are not limited thereto.

In some embodiments, the digital signature system displays a key application interface, through which the user may trigger a key application request.

The application interface includes an input box for the identifier of the controller and an input box for the identifier of the digital signature algorithm, as well as a confirm option for the key application. The user enters the identifier of the target controller into the input box for the identifier of the controller, for example, the name of the target controller. The user may enter the identifier of the digital signature algorithm into the input box for the identifier of the digital signature algorithm, such as the name of the target digital signature algorithm. After completing the entering, the user may click "Confirm Key Application" option, which will cause the digital signature system to acquire a key application request containing the identifier of the target controller and the identifier of the target signature algorithm.

It should be noted that the above description assumes that the key application request contains the identifier of the target controller and the identifier of the target digital signature algorithm. In practice, to enable the digital signature system to record more detailed information about the key application request, the key application request may also carry the identifier of a vendor of the target controller, the vehicle model in which the target controller is installed, the applicant, the flashing process, the application time, and any notes. These characteristics, together with the private key from the first key pair, are stored in the first database. Thus, after a user submits a key application request, if the key application request determines that the private key in the first key pair is already stored in the first database, the key application interface will display information such as the identifier of the vendor of the target controller, the vehicle model in which the target controller is installed, the applicant, the flashing process, the application time, and any notes corresponding to the private key in the first key pair, allowing the user to have knowledge about the application information for the first key pair in greater detail.

In step 503, the digital signature system generates a first signature file based on the digest of the software update package for the target software and the private key in the first key pair. The first signature file is used to verify the authenticity and integrity of the software update package before the target controller updates the target software.

In some embodiments, the digital signature system uses the private key in the first key pair to encrypt the digest of the software update package for the target software, thereby generating a first signature file.

Based on the above description, the digital signature system invokes the hardware encryptor to encrypt the private key in the first key pair and stores the encrypted private key in the first database. Furthermore, the digital signature system is able to know the encryption algorithm used by the hardware encryptor to encrypt the private key. In this manner, the process of generating the first signature file based on the digest of the software update package for the target software and the private key in the first key pair includes: decrypting the encrypted private key based on the encryption algorithm for the private key in the first key pair; and generating the first signature file based on the digest of the software update package for the target software and the decrypted private key.

In other words, since the first database stores the encrypted private key in the first key pair, the digital signature system must first decrypt the private key in the first key pair using the known encryption algorithm, and then use the decrypted private key to encrypt the digest of the software update package for the target software to generate the first signature file.

In some embodiments, after the digital signature system generates the first signature file, a technician may download the first signature file and store the first signature file and the software update package in a second database based on the identifier of the target controller and the software update package version of the target software. Alternatively, if the digital signature system is connected to the second database, the digital signature system may send the first signature file to the second database after generating the first signature file, such that the second database stores the first signature file based on the identifier of the target controller and the software update package version of the target software.

In step 504, the after-sales upgrade system acquires a software update task. The software update task carries the identifier of the target controller and the update version of the target software.

In some embodiments, when the version of the target software in the target controller needs to be updated, after-sales personnel can configure a software update task based on the version of target software that needs to be updated and send the configured software update task to the after-sales upgrade system, allowing the after-sales upgrade system to acquire the software update task. To identify the target controller from multiple controllers, the software update task carries the identifier of the target controller. Since the target software includes multiple update versions, the software update task further carries the update version of the target software. This allows the target controller to determine the target software version to which it needs to be updated, thereby acquiring the corresponding software update package in subsequent processes.

In step 505, the after-sales upgrade system acquires the software update package for the target software and the first signature file based on the identifier of the target controller and the update version of the target software.

As described above, the software update package for the target software and the first signature file are stored in the second database based on the identifier of the target controller and the software update package version of the target software. Therefore, after acquiring the software update task, the after-sales upgrade system obtains the first signature file and software update package for the target software from the second database based on the identifier of the target controller and the update version of the target software.

In step 506, the after-sales upgrade system sends the software update package for the target software and the first signature file to the target controller by the diagnostic device, such that the target controller updates the target software according to the software update package in response to the success of verification of the software update package using the first signature file.

In some embodiments, a diagnostic device is externally connected to the vehicle. Thus, the after-sales upgrade system can use the diagnostic device to send the software update package for the target software and the first signature file to the target controller. Furthermore, since the diagnostic device is externally connected to the vehicle, technicians can view the software update progress of the target controller in real time through the display interface of the diagnostic device while the target controller is updating according to the software update package for the target software. The technicians may determine whether the target controller will malfunction during the software update. Furthermore, if a malfunction occurs in the target controller, the technician may use the diagnostic device to promptly determine the cause of the malfunction.

As described above, the public key in the first key pair is public. Therefore, after the target controller receives the first signature file, the user can directly acquire the public key in the first key pair using the query module in the digital signature interface based on the identifier of the target controller and the identifier of the target digital signature algorithm. Further, the target controller can then use the public key in the first key pair to decrypt the software update package for the target software and verify the authenticity and integrity of the software update package for the target software.

In some embodiments, in order to further ensure the security of the target controller during the updating of the target software, the method may further include the following steps (1) - (7);
(1) The after-sales upgrade system compresses the software update package and the first signature file to obtain a compressed data package.
   In some embodiments, after acquiring the software update package for the target software and the first signature file, the after-sales upgrade system compresses the software update package for the target software and the first signature file to obtain a compressed data package, and sends the compressed data package to the digital signature system, so that the digital signature system can receive the compressed data package.
(2) The after-sales upgrade system sends the compressed data package to the digital signature system.
(3) The digital signature system receives the compressed data package sent by the after-sales upgrade system, which contains the software update package for the target software and the first signature file.
   Since the compressed data package is acquired after the after-sales upgrade system compresses the software update package for the target software and the first signature file, the compressed data package contains the software update package for the target software and the first signature file.
(4) The digital signature system generates a second key pair corresponding to the compressed data package, and generates a second signature file based on the compressed data package and the private key in the second key pair. The second signature file is used to verify the authenticity and integrity of the compressed data package.

After receiving the compressed data package, the digital signature system directly generates the corresponding second key pair based on the compressed data package. Alternatively, the digital signature system invokes a hardware encryptor to generate the second key pair.

In some embodiments, the digital signature system also acquires a digest of the compressed data package based on the compressed data package, and encrypts the digest of the compressed data package using the private key in the second key pair to generate a second signature file.

In addition, in some embodiments, since the second key pair is generated in real time based on different compressed data packages, and in the subsequent process, the digital signature system sends the public key in the second key pair to the after-sales upgrade system, the digital signature system does not need to store the second key pair.

(5) The digital signature system sends the second signature file and the public key in the second key pair to the after-sales upgrade system.

(6) The after-sales upgrade system receives the second signature file and the public key in the second key pair sent by the digital signature system.

(7) The after-sales upgrade system sends the compressed data package, the second signature file, and the public key in the second key pair to the diagnostic device, so that the diagnostic device sends the software update package for the target software and the first signature file to the target controller in response to success of verification of the compressed data package using the public key in the second key pair and the second signature file.

Based on the above description, it can be seen that after generating the second signature file, the digital signature system may send the second signature file and the public key in the second key pair to the after-sales upgrade system. In this way, when the target controller needs to use the diagnostic device to update the target software, the after-sales upgrade system can send the public key in the second key pair, the second signature file, and the compressed data package to the diagnostic device, so that the diagnostic device uses the public key in the second key pair to decrypt the second signature file to obtain the first digest of the compressed data package. The first digest is the digest of the compressed data package carried in the second signature file. Then, the diagnostic device generates a second digest of the compressed data package based on the received compressed data package, and compares the first digest and the second digest of the compressed data package to verify the received compressed data package.

That is, if the first digest and second digest of the compressed data package are consistent, it indicates that the compressed data package has passed verification, and if the first digest and second digest of the data package are inconsistent, it indicates that the compressed data package has failed verification.

After the data package passes verification, the diagnostic device can decompress the data package to acquire the software update package for the target software and the first signature file, and then send the software update package for the target software and the first signature file to the target controller. Thus, the target controller can then use the public key in the first key pair to decrypt the first signature file to acquire the digest of the software update package for the target software. The target controller can then acquire the digest of the software update package for the target software based on the software update package for the target software and compare the decrypted digest of the software update package for the target software with the digest of the software update package for the target software it has acquired to verify the authenticity and integrity of the received update package for the target software.

In other words, if the digest of the software update package for the target software acquired after decryption by the target controller is consistent with the digest of the software update package for the target software it has acquired, it indicates that the authenticity and integrity of the received software update package for the target software have been verified. Thus, the target controller can then update the target software based on the received software update package for the target software. If the digest of the software update package for the target software acquired after decryption by the target controller is inconsistent with the digest of the software update package for the target software it has acquired, it indicates that the received software update package for the target software may have been illegally tampered with, and the target controller will not upgrade the target software based on the received software update package for the target software.

Based on the above description, it can be seen that the digital signature system is directly interfaced with the after-sales upgrade system to generate the second signature file. Therefore, after bidirectional authentication between the digital signature system and the after-sales upgrade system is successful, the first signature file is acquired by directly interfacing the digital signature system with the after-sales upgrade system. Specifically, the digital signature system acquires the identifier of the target controller, the identifier of the target digital signature algorithm, and the digest of the software update package for the target software based on parsing of the data packet sent by the after-sales upgrade system. In this way, the digital signature system uses the private key in the first key pair to encrypt the digest of the software update package for the target software sent by the after-sales upgrade system, thereby generating the first signature file.

The following is an overall explanation of the method for updating software of the vehicle controller according to the embodiments of the present disclosure.

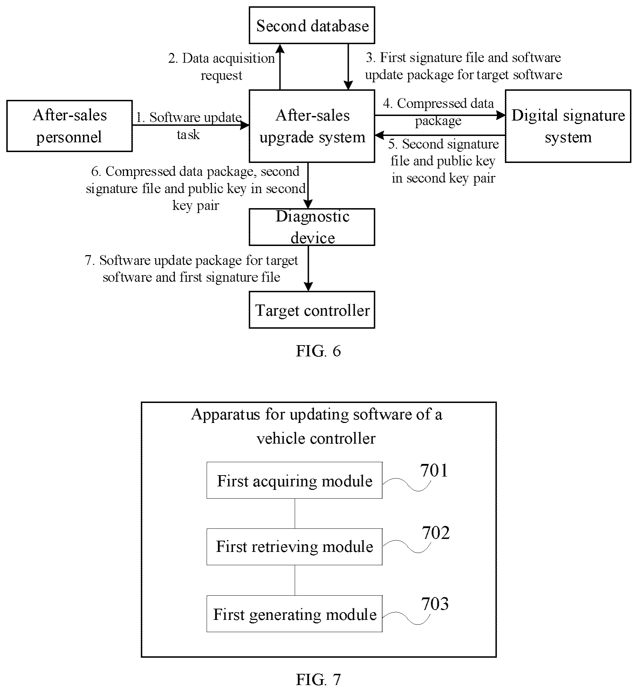

Referring to FIG. 6, which is a flowchart of a method for updating software of a vehicle controller according to some embodiments of the present disclosure. As can be seen from the figure, after-sales personnel first issues the configured software update task to the after-sales upgrade system. The after-sales upgrade system sends a data acquisition request to the second database based on the identifier of the target controller and the update version of the target software carried by the software update task to acquire the first signature file and the software update package for the target software. After acquiring the first signature file and the software update package for the target software, the after-sales upgrade system compresses the software update package and the first signature file to obtain a compressed data package, and sends the compressed data package to the digital signature system. The digital signature system generates a second key pair corresponding to the compressed data package, generates a second signature file based on the compressed data package and the private key in the second key pair, and sends the second signature file and the public key in the second key pair to the after-sales upgrade system. Thereafter, the after-sales upgrade system sends the compressed data package, the second signature file, and the public key in the second key pair to the diagnostic device. The diagnostic device verifies the compressed data package, and after the verification is passed, decompresses the compressed data package to acquire the software update package for the target software and the first signature file, and sends the software update package for the target software and the first signature file to the target controller. Then, the target controller verifies the software update package for the target software, and after the verification is passed, updates the target software according to the software update package for the target software.

In some embodiments of the present disclosure, the first database stores private keys in the key pairs applied for different controllers and different digital signature algorithms. In this way, when the digital signature system needs to generate a signature file for the software update package for the target software, it retrieves the private key in the first key pair from the first database based on the identifier of the target controller and the identifier of the target digital signature algorithm, and then generates the first signature file using the digest of the software update package for the target software and the private key in the first key pair. In other words, the method according to the embodiments of the present disclosure queries the private key in the key pair online when generating the signature file by performing unified online management of the key pair, compared with offline management and querying of private keys, the efficiency of retrieving the key pair is improved, and the efficiency of generating the signature file is further improved. Even if the software is frequently upgraded, the efficiency of the digital signature can be improved, and the development schedules of the vehicle will not be affected. Moreover, the digital signature system encrypts the private key in the first key pair, which can further ensure the security of the digital signature process. Furthermore, the after-sales upgrade system compresses the software update and the first signature file to obtain a compressed data package, and sends the compressed data package to the digital signature system. The digital signature system then generates a second signature file based on the compressed data package and the private key in the second key pair. Thus, the security of the target controller during the target software update is further ensured, preventing security risks to the target controller caused by illegal tampering with the software update package for the target software.

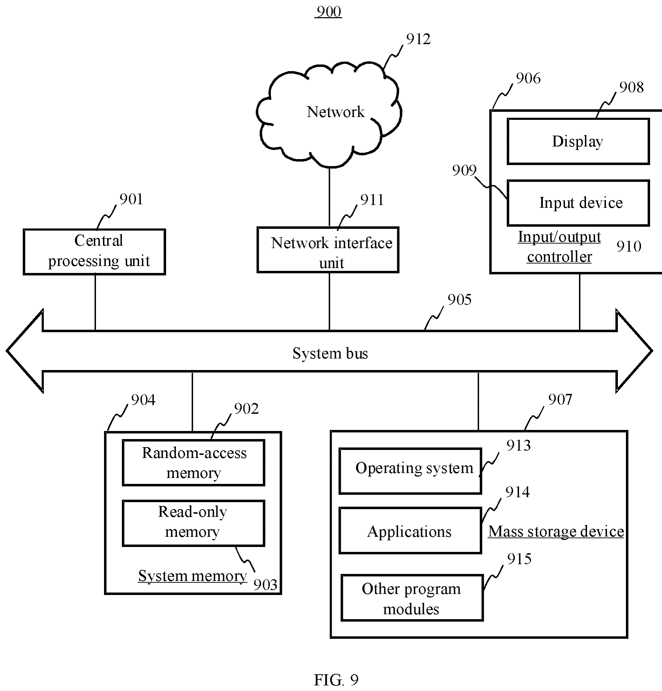

FIG. 7 is a schematic structural diagram of an apparatus for updating software of a vehicle controller according to some embodiments of the present disclosure. The apparatus for updating software of the vehicle controller can be implemented as part or all of the digital signature system using software, hardware, or a combination of both. The digital signature system may be the server shown in FIG. 9. Referring to FIG. 7, the apparatus includes: a first acquiring module 701, a first retrieving module 702, and a first generating module 703.

The first acquiring module 701 is configured to acquire an identifier of a target controller, an identifier of a target digital signature algorithm, and a digest of a software update package for a target software, wherein the target controller is a controller configured to install the target software.

The first retrieving module 702 is configured to retrieve a private key in a first key pair from a first database based on the identifier of the target controller and the identifier of the target digital signature algorithm, wherein the first database is configured to store private keys in key pairs applied for different controllers and different digital signature algorithms, and the first key pair is the key pair applied for the target controller and the target digital signature algorithm.

The first generating module 703 is configured to generate a first signature file based on the digest of the software update package for the target software and the private key in the first key pair, wherein the first signature file is configured to verify the authenticity and integrity of the software update package before the target controller updates the target software.

Optionally, the first acquiring module 701 includes:
a displaying submodule configured to display a digital signature interface, wherein the displaying submodule is used to acquire a digest of an update package of a currently to-be-signed software, an identifier of the controller for installing the currently to-be-signed software, and an identifier of a digital signature algorithm to be adopted; and
an acquiring submodule configured to acquire the identifier of the target controller, the identifier of the target digital signature algorithm, and the digest of the software update package for the target software from the digital signature interface.

Optionally, the apparatus further includes:
a second acquiring module configured to acquire a key application request, the key application request containing the identifier of the target controller and the identifier of the target digital signature algorithm;
a second retrieving module configured to retrieve the first database for the private key in the first key pair based on the identifier of the target controller and the identifier of the target digital signature algorithm; and
a second generating module configured to, in response to the private key in the first key pair being not stored in the first database, generate the first key pair by invoking a hardware encryptor, and store the private key in the first key pair in the first database based on the identifier of the target controller and the identifier of the target digital signature algorithm.

Optionally, the apparatus further includes:
an encrypting module configured to encrypt the private key in the first key pair by invoking the hardware encryptor and acquiring an encryption algorithm for the private key in the first key pair;
the second generating module includes:
   a storing submodule configured to store the encrypted private key in the first key pair in the first database based on the identifier of the target controller and the identifier of the target digital signature algorithm; and
the first generating module includes:
   a decrypting submodule configured to decrypt the encrypted private key based on the encryption algorithm for the private key in the first key pair; and to generate the first signature file based on the digest of the software update package for the target software and the decrypted private key.

Optionally, the apparatus further includes:
a receiving module configured to receive a compressed data package sent by an after-sales upgrade system, the compressed data package containing the software update package for the target software and the first signature file;
a third generating module configured to generate a second key pair corresponding to the compressed data package, and generate a second signature file based on the compressed data package and a private key in the second key pair, the second signature file being configured to verify the authenticity and integrity of the compressed data package; and
a sending module configured to send the second signature file and a public key in the second key pair to the after-sales upgrade system, such that the after-sales upgrade system sends the public key in the second key pair, the second signature file, and the compressed data package to a diagnostic device, thereby instructing the target controller to update the target software upon success of verification of the compressed data package by the diagnostic device.

In some embodiments of the present disclosure, the first database stores private keys in the key pairs applied for different controllers and different digital signature algorithms. In this way, when there is a need to generate a signature file for the software update package for the target software, the digital signature system can retrieve the private key in the first key pair from the first database based on the identifier of the target controller and the identifier of the target digital signature algorithm, and then generate the first signature file using the digest of the software update package for the target software and the private key in the first key pair. In other words, by centrally managing key pairs online, the private key in the key pair can be queried online when generating signature files, which improves the efficiency of key pair retrieval, and thus the efficiency of signature file generation, compared to offline management and querying of private keys. The efficiency of the digital signature process is improved even with frequent software upgrades, without impacting vehicle development schedules.

It should be noted that the apparatus for updating software of the vehicle controller according to the above embodiments uses only the aforementioned functional module divisions as an example for controller software updates. In actual applications, the aforementioned functions can be assigned to different functional modules as needed. That is, the internal structure of the apparatus may be divided into different functional modules to perform all or part of the functions described above. Furthermore, the apparatus for updating software of the vehicle controller according to the above embodiments shares the same concept as the embodiments of the method for updating software of the vehicle controller. The specific implementation process is detailed in the method embodiment and will not be further described here.

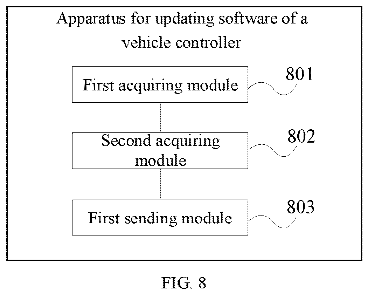

FIG. 8 is a schematic structural diagram of an apparatus for updating software of a vehicle controller according to some embodiments of the present disclosure. The apparatus for updating software of the vehicle controller can be implemented using software, hardware, or a combination of both to form part or all of an after-sales upgrade system. The after-sales upgrade system may be the server shown in FIG. 9. Referring to FIG. 8, the apparatus includes a first acquiring module 801, a second acquiring module 802, and a first sending module 803.

The first acquiring module 801 is configured to acquire a software update task, wherein the software update task carries an identifier of a target controller and an updated version of a target software, and the target controller is used for installing the target software.

The second acquiring module 802 is configured to acquire a software update package for the target software and a first signature file based on the identifier of the target controller and the updated version of the target software, wherein the first signature file is used to verify the authenticity and integrity of the software update package for the target software before the target controller updates the target software.

The first sending module 803 is configured to send the software update package for the target software and the first signature file to the target controller by a diagnostic device, such that the target controller updates the target software according to the software update package in response to the success of verification of the software update package based on the first signature file.

Optionally, the apparatus further includes:
a compressing module configured to compress the software update package and the first signature file to obtain a compressed data package;
a second sending module configured to send the compressed data package to a digital signature system such that the digital signature system generates a second key pair corresponding to the compressed data package and generates a second signature file based on the compressed data package and a private key in the second key pair, wherein the second signature file is used to verify the authenticity and integrity of the compressed data package; and
a receiving module configured to receive the second signature file and a public key in the second key pair sent by the digital signature system;
the first sending module 803 includes:
   a sending submodule configured to send the compressed data package, the second signature file, and the public key in the second key pair to the diagnostic device such that the diagnostic device sends the software update package for the target software and the first signature file to the target controller in response to success of verification of the compressed data package using the public key in the second key pair and the second signature file.

In some embodiments of the present disclosure, the after-sales upgrade system sends the software update package for the target software and the first signature file to the target controller by the diagnostic device. Further, the target controller updates the software according to the software update package in response to the success of verification of the software update package based on the first signature file. Because the first signature file is generated by online querying the private key in the key pair, the efficiency of key pair retrieval and thus the efficiency of signature file generation are improved compared to offline private key management and querying. The efficiency of the digital signature process is improved even with frequent software updates, without impacting vehicle development schedules. Furthermore, verifying the software update package using the first signature file can prevent security risks during software upgrades caused by illegal tampering with the software update package.

It is to be noted that the division of all of the above functional modules is described only as an example when the apparatus for updating software of a vehicle controller when the controller's software is undergoing updates. In practice, the above functions may be completed by different functional modules as required. That is, an internal structure of the apparatus may be divided into different functional modules to complete all or part of the functions described above. In addition, the apparatus for updating software of a vehicle controller according to the above embodiments belongs to the same concept as the method embodiments for updating software of a vehicle controller. For specific implementation process thereof, reference may be made to the method embodiments, which are not described any further herein.

FIG. 9 is a schematic structural diagram of a server according to some embodiments of the present disclosure. The server 900 includes a central processing unit (CPU) 901, a system memory 904 including a random-access memory (RAM) 902 and a read-only memory (ROM) 903, and a system bus 905 that connects the system memory 904 and the CPU 901. The server 900 further includes a basic input/output system (I/O system) 906 that facilitates transmitting information between respective devices within the computer, and a mass storage device 907 configured to store an operating system 913, applications 914, and other program modules 915.

The basic input/output system 906 includes a display 908 configured to display information and an input device 909, such as a mouse or keyboard, for the user to input information. The display 908 and the input device 909 are both connected to the CPU 901 via an input/output controller 910 that is connected to the system bus 905. The basic I/O system 906 may further include an input/output controller 910 configured to receive and process the input from a plurality of other devices, such as a keyboard, mouse, or electronic stylus. Similarly, the input/output controller 910 further provides output to a display screen, a printer, or other types of output devices.

The mass storage device 907 is connected to the CPU 901 by a mass storage controller (not shown) connected to the system bus 905. The mass storage device 907 and the related computer-readable mediums provide non-transitory storage for the server 900. That is, the mass storage device 907 may include a computer-readable medium (not shown), such as, a hard disk or a CD-ROM drive.

Without loss of generality, the computer-readable medium may include a computer storage medium and a communication medium. The computer storage medium includes transitory and non-transitory, removable and non-removable mediums implemented by any method or technology for storing the information, such as, computer-readable instructions, data structures, program modules, or other data. The computer storage medium includes a RAM, a ROM, an erasable programmable read-only memory (EPROM), an electrically erasable programmable read only memory (EEPROM), a flash memory or other solid state storage memory, a compact disc read-only memory (CD-ROM), a digital versatile disc (DVD) or other optical storage memory, a tape cartridge, a magnetic tape, a magnetic disk, or other magnetic storage devices. A person skilled in the art will appreciate that the computer storage medium is not limited to the above ones. The aforesaid system memory 904 and mass storage device 907 may be collectively referred to as a memory.

According to various embodiments of the present disclosure, the server 900 may further be operated by a remote computer connected to the network through a network such as the Internet. That is, the server 900 is connected to a network 912 through a network interface unit 911 connected to the system bus 905, or may be connected to other types of networks or remote computer systems (not shown) through the network interface unit 911.

The above memory further includes one or more programs stored therein and configured to be executed by the CPU.

In some embodiments, a computer-readable storage medium is also provided, wherein the storage medium stores a computer program. When executed by a processor, the computer program implements the method for updating software of a vehicle controller described in the above embodiments. For example, the computer-readable storage medium may be a ROM, a RAM, a CD-ROM, a magnetic tape, a floppy disk, an optical data storage device, or the like.

It should be noted that the computer-readable storage medium mentioned in the embodiments of the present disclosure may be a non-volatile storage medium, in other words, a non-transitory storage medium.

It should be understood that all or part of the steps of the above embodiments may be implemented through software, hardware, firmware, or any combination thereof. When implemented using software, it may be fully or partially implemented in the form of a computer program product. The computer program product includes one or more computer instructions. The computer instructions may be stored on the computer-readable storage medium.

That is, in some embodiments, a computer program product including instructions is also provided. When executed on a computer, it causes the computer to perform the method for updating software of a vehicle controller as described above.

It should be understood that the term "at least one" as used herein refers to one or more, while "a plurality of" refers to two or more. In the description of the embodiments of the present disclosure, unless otherwise specified, "/" denotes "or". For example, A/B may denote A or B. The term "and/or" herein merely describes an associative relationship between associated objects, indicating that three types of relationships may exist. For example, A and/or B may denote: the sole existence of A, the simultaneous existence of A and B, or the sole existence of B. Additionally, to facilitate a clear description of the technical solutions in the embodiments of the present disclosure, terms such as "first" and "second" are used to distinguish identical or similar items with essentially the same functions and roles. Those skilled in the art will understand that such terms do not impose limitations on quantity or execution order, nor do they necessarily imply distinct differences.

It should be noted that the information (including but not limited to user device information, users' personal information, etc.), data (including but not limited to data for analysis, stored data, displayed data, etc.), and signals involved in the embodiments of the disclosure are all authorized by the user or fully authorized by all parties. The collection, use, and processing of such data must comply with the relevant laws, regulations, and standards of the respective countries and regions.

The foregoing descriptions are merely embodiments of the present disclosure, and are not intended to limit the present disclosure. Any modifications, equivalent substitutions, improvements, etc., made within the principles of the present disclosure are within the protection scope of the present disclosure.

## Claims

1. A method for updating software of a vehicle controller, applicable to a digital signing system and comprising:
acquiring an identifier of a target controller, an identifier of a target digital signature algorithm, and a digest of a software update package for a target software, wherein the target controller is used for installing the target software;
retrieving a private key in a first key pair from a first database based on the identifier of the target controller and the identifier of the target digital signature algorithm, wherein the first database is configured to store private keys in key pairs applied for different controllers and different digital signature algorithms, and the first key pair is applied for the target controller and the target digital signature algorithm; and
generating a first signature file based on the digest of the software update package for the target software and the private key in the first key pair, wherein the first signature file is used to verify authenticity and integrity of the software update package before the target controller updates the target software.

2. The method according to claim 1, wherein the acquiring the identifier of the target controller, the identifier of the target digital signature algorithm, and the digest of the software update package for the target software comprises:
displaying a digital signature interface, wherein the digital signature interface is configured to acquire a digest of an update package of a currently to-be-signed software, an identifier of a controller for installing the currently to-be-signed software, and an identifier of a digital signature algorithm to be adopted; and
acquiring the identifier of the target controller, the identifier of the target digital signature algorithm, and the digest of the software update package for the target software from the digital signature interface.

3. The method according to claim 1, wherein, before acquiring the identifier of the target controller, the identifier of the target digital signature algorithm, and the digest of the software update package for the target software, the method further comprises:
acquiring a key application request, wherein the key application request contains the identifier of the target controller and the identifier of the target digital signature algorithm;
retrieving the first database for the private key in the first key pair based on the identifier of the target controller and the identifier of the target digital signature algorithm; and
in response to the private key in the first key pair not being stored in the first database, generating the first key pair by invoking a hardware encryptor, and storing the private key in the first key pair in the first database based on the identifier of the target controller and the identifier of the target digital signature algorithm.

4. The method according to claim 3, wherein, after generating the first key pair by invoking the hardware encryptor, the method further comprises: encrypting the private key in the first key pair by invoking the hardware encryptor and acquiring an encryption algorithm for the private key in the first key pair;
storing the private key in the first key pair in the first database based on the identifier of the target controller and the identifier of the target digital signature algorithm comprises: storing the encrypted private key in the first key pair in the first database based on the identifier of the target controller and the identifier of the target digital signature algorithm; and
generating the first signature file based on the digest of the software update package for the target software and the private key in the first key pair comprises: decrypting the encrypted private key based on the encryption algorithm for the private key in the first key pair; and generating the first signature file based on the digest of the software update package for the target software and the decrypted private key.

5. The method according to claim 1, further comprising:
receiving a compressed data package sent by an after-sales upgrade system, wherein the compressed data package contains the software update package for the target software and the first signature file;
generating a second key pair corresponding to the compressed data package, and generating a second signature file based on the compressed data package and a private key in the second key pair, wherein the second signature file is configured to verify authenticity and integrity of the compressed data package; and
sending the second signature file and a public key in the second key pair to the after-sales upgrade system, such that the after-sales upgrade system sends the public key in the second key pair, the second signature file, and the compressed data package to a diagnostic device, thereby instructing the target controller to update the target software upon success of verification of the compressed data package by the diagnostic device.

6. A method for updating software of a vehicle controller, applicable to an after-sales upgrade system and comprising:
acquiring a software update task, wherein the software update task carries an identifier of a target controller and an updated version of a target software, and the target controller is used for installing the target software;
acquiring a software update package for the target software and a first signature file based on the identifier of the target controller and the updated version of the target software, wherein the first signature file is used to verify authenticity and integrity of the software update package for the target software before the target controller updates the target software; and
sending the software update package for the target software and the first signature file to the target controller by a diagnostic device, such that the target controller updates the target software based on the software update package in response to success of verification of the software update package based on the first signature file.

7. The method according to claim 6, wherein, before sending the software update package for the target software and the first signature file to the target controller by the diagnostic device, the method further comprises:
compressing the software update package and the first signature file to obtain a compressed data package;
sending the compressed data package to a digital signature system such that the digital signature system generates a second key pair corresponding to the compressed data package and generates a second signature file based on the compressed data package and a private key in the second key pair, wherein the second signature file is used to verify authenticity and integrity of the compressed data package; and
receiving the second signature file and a public key in the second key pair sent by the digital signature system;
sending the software update package for the target software and the first signature file to the target controller by the diagnostic device comprises:
sending the compressed data package, the second signature file, and the public key in the second key pair to the diagnostic device such that the diagnostic device sends the software update package for the target software and the first signature file to the target controller in response to success of verification of the compressed data package using the public key in the second key pair and the second signature file.

8. An apparatus for updating software of a vehicle controller, comprising:
a first acquiring module configured to acquire an identifier of a target controller, an identifier of a target digital signature algorithm, and a digest of a software update package for a target software, wherein the target controller is used for installing the target software;
a first retrieving module configured to retrieve a private key in a first key pair from a first database based on the identifier of the target controller and the identifier of the target digital signature algorithm, wherein the first database is configured to store private keys in key pairs applied for different controllers and different digital signature algorithms, and the first key pair is applied for the target controller and the target digital signature algorithm; and
a first generating module configured to generate a first signature file based on the digest of the software update package for the target software and the private key in the first key pair, wherein the first signature file is used to verify authenticity and integrity of the software update package before the target controller updates the target software.

9. The apparatus for updating software according to claim 8, wherein the first acquiring module comprises:
a displaying submodule configured to display a digital signature interface, wherein the digital signature interface is used to acquire a digest of an update package of a currently to-be-signed software, an identifier of a controller for installing the currently to-be-signed software, and an identifier of a digital signature algorithm to be adopted; and
an acquiring submodule configured to acquire the identifier of the target controller, the identifier of the target digital signature algorithm, and the digest of the software update package for the target software from the digital signature interface.

10. The apparatus for updating software according to claim 8, further comprising:
a second acquiring module configured to acquire a key application request, wherein the key application request contains the identifier of the target controller and the identifier of the target digital signature algorithm;
a second retrieving module configured to retrieve the first database for the private key in the first key pair based on the identifier of the target controller and the identifier of the target digital signature algorithm; and
a second generating module configured to, in response to the private key in the first key pair not being stored in the first database, generate the first key pair by invoking a hardware encryptor, and store the private key in the first key pair in the first database based on the identifier of the target controller and the identifier of the target digital signature algorithm.

11. The apparatus for updating software according to claim 10, further comprising:
an encrypting module configured to encrypt the private key in the first key pair by invoking the hardware encryptor and acquire an encryption algorithm for the private key in the first key pair;
the second generating module comprises:
a storing submodule configured to store the encrypted private key in the first key pair in the first database based on the identifier of the target controller and the identifier of the target digital signature algorithm; and
the first generating module comprises:
a decrypting submodule configured to decrypt the encrypted private key based on the encryption algorithm for the private key in the first key pair; and to generate the first signature file based on the digest of the software update package for the target software and the decrypted private key.

12. The apparatus for updating software according to claim 8, further comprising:
a receiving module configured to receive a compressed data package sent by an after-sales upgrade system, wherein the compressed data package contains the software update package for the target software and the first signature file;
a third generating module configured to generate a second key pair corresponding to the compressed data package, and generate a second signature file based on the compressed data package and a private key in the second key pair, wherein the second signature file is configured to verify authenticity and integrity of the compressed data package; and
a sending module configured to send the second signature file and a public key in the second key pair to the after-sales upgrade system, such that the after-sales upgrade system sends the public key in the second key pair, the second signature file, and the compressed data package to a diagnostic device, thereby instructing the target controller to update the target software upon success of verification of the compressed data package by the diagnostic device.

13. An apparatus for updating software of a vehicle controller, comprising:
a first acquiring module configured to acquire a software update task, wherein the software update task carries an identifier of a target controller and an updated version of a target software, and the target controller is used for installing the target software;
a second acquiring module configured to acquire a software update package for the target software and a first signature file based on the identifier of the target controller and the updated version of the target software, wherein the first signature file is used to verify authenticity and integrity of the software update package for the target software before the target controller updates the target software; and
a first sending module configured to send the software update package for the target software and the first signature file to the target controller by a diagnostic device, such that the target controller updates the target software based on the software update package in response to success of verification of the software update package based on the first signature file.

14. The apparatus for updating software according to claim 13, further comprising:
a compressing module configured to compress the software update package and the first signature file to obtain a compressed data package;
a second sending module configured to send the compressed data package to a digital signature system such that the digital signature system generates a second key pair corresponding to the compressed data package and generates a second signature file based on the compressed data package and a private key in the second key pair, wherein the second signature file is used to verify authenticity and integrity of the compressed data package; and
a receiving module configured to receive the second signature file and a public key in the second key pair sent by the digital signature system; and
the first sending module comprises:
a sending submodule configured to send the compressed data package, the second signature file, and the public key in the second key pair to the diagnostic device such that the diagnostic device sends the software update package for the target software and the first signature file to the target controller in response to success of verification of the compressed data package using the public key in the second key pair and the second signature file.

15. A digital signature system, wherein the computer device comprises a memory and a processor, the memory being configured to store a computer program, wherein the processor, when executing the computer program stored in the memory, is caused to perform the method for updating software of the vehicle controller as defined in any one of claims 1 to 5.

16. A computer program product comprising instructions, wherein the instructions, when executed on a computer, cause the computer to perform the method for updating software of the vehicle controller as defined in any one of claims 1 to 5.
